# EUROPEAN PATENT APPLICATION

(11) **EP 4 459 357 A1**
(43) Date of publication of application: **06.11.2024**
(21) Application number: 22924817.4
(22) Date of filing: 04.02.2022
(51) Int. Cl.: G02B 26/04, G02B 5/18, G02B 27/42, G09F 19/12

(54) **DYNAMIC LIGHT PATTERN GENERATOR**

(71) Applicant: MITSUBISHI ELECTRIC CORPORATION, Chiyoda-ku Tokyo 100-8310 (JP)
(72) Inventor: MIYAGI, Yukari, Tokyo 100-8310 (JP); YAMAUCHI, Takanori, Tokyo 100-8310 (JP); NISHIOKA, Junya, Tokyo 100-8310 (JP); SANO, Hayato, Tokyo 100-8310 (JP); KOSHIKAWA, Shota, Tokyo 100-8310 (JP)
(74) Representative: Pfenning, Meinig & Partner mbB
(86) International application number: PCT/JP2022/004354
(87) International publication number: WO 2023/148907

(57) **Abstract**

A dynamic light pattern generator (10) includes a laser light source (12) to emit laser light (20), a mask (13) rotatably supported about an optical axis (12a) of the laser light source (12) and capable of absorbing and transmitting the laser light (20) emitted from the laser light source (12), and a diffractive optical element (15) including, on a same plane, a plurality of diffractive optical element components (15a, 15) to change a phase of the laser light (20) transmitted through the mask (13) and individually emit diffracted light beams with phase distributions for generating partial light patterns (21, 22) different from each other.

## Description

### TECHNICAL FIELD

The present disclosure relates to a dynamic light pattern generator.

### BACKGROUND ART

Conventionally, there has been provided a light pattern generator that generates a plurality of light patterns using one diffractive optical element. Such a conventional light pattern generator is disclosed in, for example, Patent Literature 1.

### CITATION LIST

### PATENT LITERATURES

Patent Literature 1: JP 2013-505472 A

### SUMMARY OF INVENTION

### TECHNICAL PROBLEM

The light pattern generator disclosed in Patent Literature 1 causes a light beam emitted from a light source to be incident on a liquid crystal cell and changes a voltage applied to the liquid crystal cell, thereby changing a phase distribution of the light beam transmitted through the liquid crystal cell. As a result, the light pattern generator disclosed in Patent Literature 1 can switch the light pattern of each light beam branched in the liquid crystal cell.

Here, the light pattern generator disclosed in Patent Literature 1 includes one light source. The brightness of one projected light pattern depends on the output of the light source. Therefore, the light pattern generator disclosed in Patent Literature 1 can generate a plurality of light patterns using one diffractive optical element, but cannot partially change the illuminance in one light pattern.

The present disclosure has been made to solve the above problem, and an object of the present disclosure is to provide a dynamic light pattern generator capable of generating a light pattern whose illuminance can be partially changed.

### SOLUTION TO PROBLEM

A dynamic light pattern generator according to the present disclosure includes a laser light source to emit laser light, a mask rotatably supported about an optical axis of the laser light source and capable of absorbing and transmitting the laser light emitted from the laser light source, and a diffractive optical element including, on a same plane, a plurality of diffractive optical element components to change a phase of the laser light transmitted through the mask and individually emit diffracted light beams with phase distributions for generating partial light patterns different from each other.

### ADVANTAGEOUS EFFECTS OF INVENTION

According to the present disclosure, it is possible to generate a light pattern whose illuminance can be partially changed.

### BRIEF DESCRIPTION OF DRAWINGS

FIG. 1 is a plan view of a dynamic light pattern generator according to a first embodiment.
FIG. 2 is a cross-sectional view of laser light taken along line A-A in FIG. 1.
FIG. 3 is a front view of a mask.
FIG. 4 is a front view of a diffractive optical element.
FIG. 5 is a diagram illustrating a partial light pattern generated by one diffractive optical element component.
FIG. 6 is a diagram illustrating a partial light pattern generated by the other diffractive optical element component.

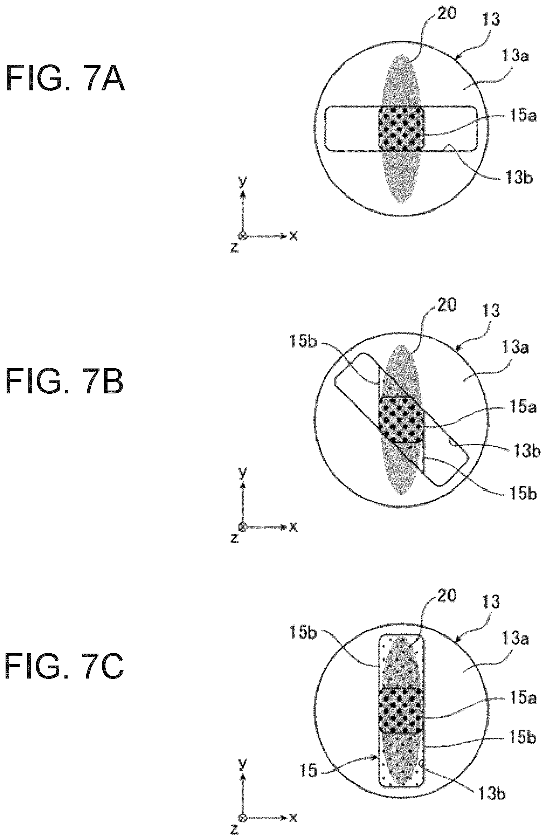

FIGS. 7A, 7B and 7C are diagrams illustrating a positional relationship between laser light, a mask, and a diffractive optical element on an xy plane. FIG. 7A is a diagram illustrating a positional relationship in a case where the long side of a transmission portion in the rotated mask is parallel to an x-axis direction. FIG. 7B is a diagram illustrating a positional relationship in a case where the long side of the transmission portion in the rotated mask is inclined with respect to a y-axis direction. FIG. 7C is a diagram illustrating a positional relationship in a case where the long side of the transmission portion in the rotated mask is parallel to the y-axis direction.
FIGS. 8A and 8B are diagrams illustrating a light pattern generated by the diffractive optical element. FIG. 8A is a diagram illustrating a state where one partial light pattern is constantly turned on with a constant illuminance and the other partial light pattern is turned on while the illuminance is changed. FIG. 8B is a diagram illustrating a state where two partial light patterns are turned on with the same illuminance.

### DESCRIPTION OF EMBODIMENTS

Hereinafter, in order to describe the present disclosure in more detail, modes for carrying out the present disclosure will be described with reference to the accompanying drawings.

### First Embodiment

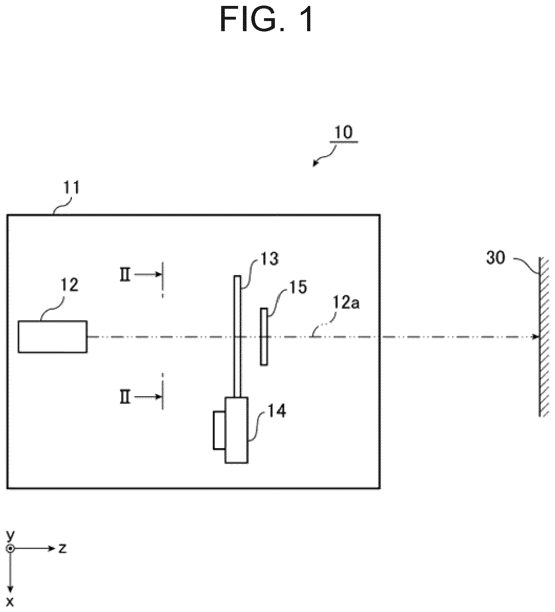

A dynamic light pattern generator 10 according to a first embodiment will be described with reference to FIGS. 1 to 8.

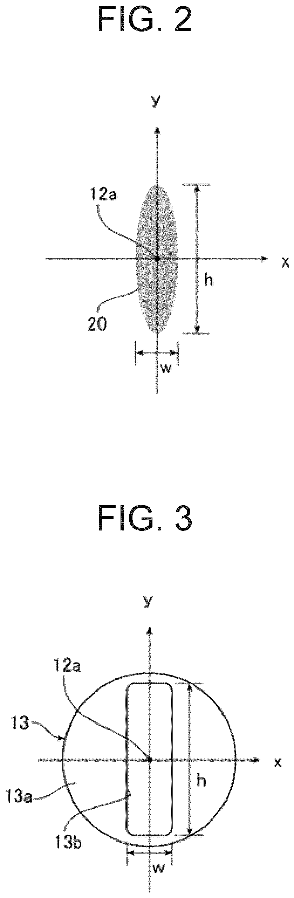

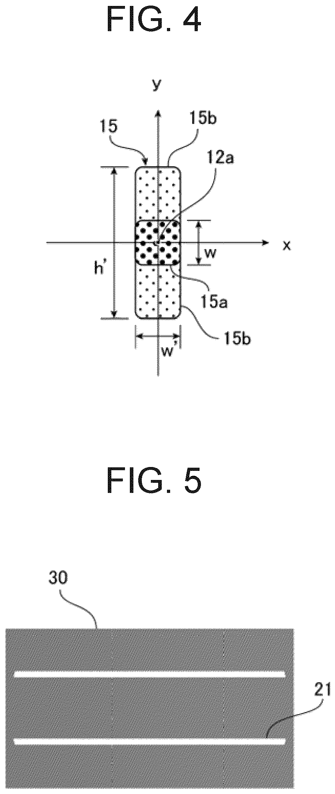

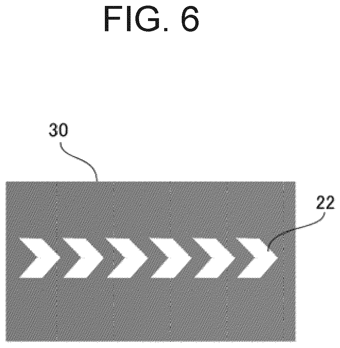

First, a configuration of the dynamic light pattern generator 10 will be described with reference to FIGS. 1 to 6. FIG. 1 is a plan view of the dynamic light pattern generator 10 according to the first embodiment. FIG. 2 is a cross-sectional view of laser light 20 taken along line A-A in FIG. 1. FIG. 3 is a front view of a mask 13. FIG. 4 is a front view of a diffractive optical element 15. FIG. 5 is a diagram illustrating a partial light pattern 21 generated by one diffractive optical element component 15a. FIG. 6 is a diagram illustrating a partial light pattern 22 generated by the other diffractive optical element component 15b.

As illustrated in FIG. 1, the dynamic light pattern generator 10 includes one base 11, one laser light source 12, one mask 13, one rotation mechanism 14, and one diffractive optical element 15. In addition, an image plane 30 is provided facing the dynamic light pattern generator 10.

Here, the coordinate system of the dynamic light pattern generator 10 is an orthogonal coordinate system including an x axis, a y axis, and a z axis. For example, the x-axis direction is a lateral direction (width direction) of the dynamic light pattern generator 10. The y-axis direction is a height direction of the dynamic light pattern generator 10. The z-axis direction is a longitudinal direction (length direction) of the dynamic light pattern generator 10, and is a direction parallel to an optical axis 12a to be described later.

The base 11 supports the laser light source 12, the mask 13, the rotation mechanism 14, and the diffractive optical element 15. The laser light source 12, the mask 13, the rotation mechanism 14, and the diffractive optical element 15 are mounted on the surface of the base 11.

The laser light source 12 is a light source that emits the laser light 20 with a single wavelength (see FIG. 2). The optical axis 12a of the laser light source 12 is a central axis of the laser light 20 emitted from the laser light source 12, and is also a symmetrical axis of the mask 13 and the diffractive optical element 15. Note that the laser light source 12 is, for example, a semiconductor laser, a fiber laser, or a solid-state laser.

As illustrated in FIG. 2, the cross-section of the laser light 20 has, for example, an elliptical shape. The cross-section of the laser light 20 has a long axis and a short axis. The long axis is parallel to the y-axis direction, and the length of the long axis is represented by h. The short axis is parallel to the x-axis direction, and the length of the short axis is represented by w.

The mask 13 has a disk shape. The central axis (rotation axis) of the mask 13 and the optical axis 12a are coaxially arranged. The mask 13 is rotatably supported by the base 11 about the optical axis 12a. Note that the shape of the mask 13 is not limited to a circle, and may be a rectangle, a triangle, or the like.

As illustrated in FIG. 3, the mask 13 absorbs or reflects a part of the incident laser light 20 and transmits another part different from the part. Specifically, the mask 13 includes an absorption portion 13a and a transmission portion 13b.

The absorption portion 13a absorbs or reflects the laser light 20. The absorption portion 13a is formed of, for example, a material that absorbs or reflects the incident laser light 20. Alternatively, the absorption portion 13a is coated to absorb or reflect the incident laser light 20, for example.

The transmission portion 13b transmits the laser light 20. The transmission portion 13b is formed of a material that transmits the incident laser light 20, such as glass or resin. Alternatively, the transmission portion 13b may be a space (hole).

The transmission portion 13b is formed at the center of the mask 13. The transmission portion 13b has, for example, a rectangular shape or an elliptical shape. FIG. 3 illustrates an example in which the transmission portion 13b has a rectangular shape extending in the y-axis direction. As illustrated in FIG. 3, the length of the transmission portion 13b in the y-axis direction is h, which is equal to the length h of the long axis of the laser light 20. The length of the transmission portion 13b in the x-axis direction is w, which is equal to the length w of the short axis of the laser light 20. The optical axis 12a passes through the center of the transmission portion 13b. In addition, the absorption portion 13a is disposed in such a way as to surround the periphery of the transmission portion 13b.

The rotation mechanism 14 rotates the mask 13 about the optical axis 12a. The rotation mechanism 14 includes, for example, a motor and a gear. On the other hand, the mask 13 has a gear. The gear of the rotation mechanism 14 and the gear of the mask 13 mesh with each other. Therefore, the rotation mechanism 14 rotates the gear thereof by driving the motor to rotate the gear of the mask 13. As a result, the mask 13 rotates about the optical axis 12a.

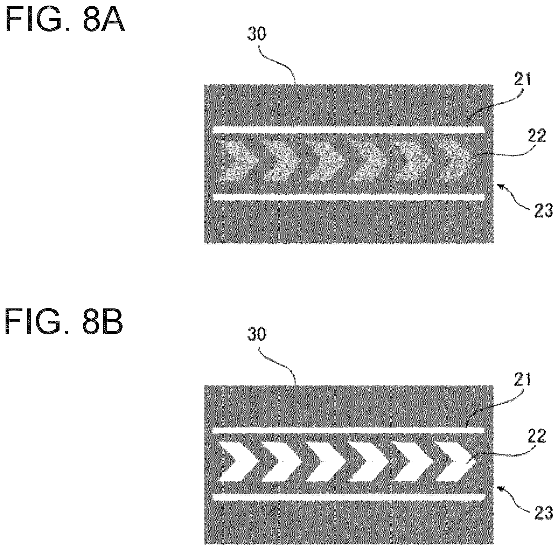

The diffractive optical element 15 forms the incident laser light 20 in a predetermined light pattern 23 (see FIG. 8). The light pattern 23 includes partial light patterns 21 and 22. Specifically, the diffractive optical element 15 is an optical element in which a surface shape (for example, a slit shape, an uneven shape, or the like) is periodically provided on a substrate formed of a material such as glass or resin. Therefore, the diffractive optical element 15 converts the incident laser light 20 into the light pattern 23 with a target intensity distribution on the image plane 30 using the diffracted light generated under the influence of the surface shape.

Here, the Fourier transform image of the phase distribution of the incident light generated by the diffractive optical element 15 is a light pattern generated after propagation. For example, in a case where the phase distribution of the incident light is a rectangular function, the light pattern after propagation is a sinc function which is a Fourier transform image of the rectangular function. That is, the diffractive optical element 15 has a surface shape for changing the phase of the incident light depending on the position on the surface where the incident light is incident. Fort this reason, the light incident on the diffractive optical element 15 is phase-modulated by the diffractive optical element 15 and has a phase distribution based on the surface shape. The diffracted light emitted from the diffractive optical element 15 then propagates to the image plane 30 and generates a light pattern which is a Fourier transform image with a phase distribution based on the surface shape. Since the light phase distribution on the emission surface of the diffractive optical element 15 is generated by the surface shape thereof, the light pattern generated by the diffractive optical element 15 with a kind of surface shape is a kind of light pattern. Therefore, in the conventional configuration, the laser light source 12 and the diffractive optical element 15 are required for each light pattern with a different lighting pattern.

In addition, as for the surface-shape design method of the diffractive optical element 15, an iterative Fourier transform method is often used. The iterative Fourier transform method is a calculation algorithm using the periodicity of the discrete Fourier transform, and is calculated with the periodicity of the distribution as a precondition. Therefore, the actual surface shape distribution of the diffractive optical element 15 is also a periodic distribution in which a plurality of phase distributions obtained by the iterative Fourier transform method are arranged.

In a case where the incident light passes through one phase distribution, the generated light pattern is a convolution integral of the phase distribution of light on the emission surface of the diffractive optical element 15 and the rectangular function, and thus, has a distribution blurred more than a light intensity distribution used for the design. For this reason, as the diffractive optical element 15 currently used, a diffractive optical element in which a plurality of light phase distributions are arranged is used. The larger the number of repetitions of the light phase distribution, the higher the intensity of reinforcement due to interference, so that a light pattern with higher brightness and darkness is generated. Therefore, even in a case where light does not transmit through the entire surface of the diffractive optical element 15 but transmits a part thereof, the diffractive optical element 15 can generate a light pattern. The brightness of the generated light pattern depends on the intensity of light transmitted through the diffractive optical element 15. For this reason, as the intensity of light decreases, the brightness of the light pattern decreases. On the other hand, as the intensity of light increases, the brightness of the light pattern increases.

Thus, the diffractive optical element 15 has, for example, a rectangular shape or an elliptical shape. FIG. 4 illustrates an example in which the diffractive optical element 15 has a rectangular shape extending in the y-axis direction. As illustrated in FIG. 4, the length of the diffractive optical element 15 in the y-axis direction is h', which is longer than the length h of the long axis of the laser light 20. The length of the diffractive optical element 15 in the x-axis direction is w', which is longer than the length w of the short axis of the laser light 20.

As illustrated in FIG. 4, the diffractive optical element 15 includes the diffractive optical element components 15a and 15b. The diffractive optical element components 15a and 15b are arranged on the same plane of the diffractive optical element 15, and the generated partial light patterns 21 and 22 are different from each other. Note that the diffractive optical element component 15a constitutes a first diffractive optical element component, and the diffractive optical element component 15b constitutes a second diffractive optical element component.

As illustrated in FIG. 5, the diffractive optical element component 15a transmits the laser light 20 to generate the partial light pattern 21 of the diffracted light. The generated partial light pattern 21 is projected on the image plane 30. The partial light pattern 21 is a light pattern that is constantly turned on. The partial light pattern 21 includes, for example, two straight lines arranged in parallel to each other.

Furthermore, the central axis of the diffractive optical element component 15a is disposed coaxially with the central axis of the mask 13 and the optical axis 12a. The length of the diffractive optical element component 15a in the y-axis direction is w, which is equal to the length w of the short axis of the laser light 20. The length of the diffractive optical element component 15a in the x-axis direction is w', which is longer than the length w of the short axis of the laser light 20.

As illustrated in FIG. 6, the diffractive optical element component 15b transmits the laser light 20 to generate the partial light pattern 22 of the diffracted light. The generated partial light pattern 22 is projected on the image plane 30. The partial light pattern 22 is a light pattern that is gradually turned on and then gradually turned off. The partial light pattern 22 includes, for example, a plurality of arrows linearly arranged in one direction.

Furthermore, the diffractive optical element components 15b are arranged adjacent to the diffractive optical element component 15a in such a way as to sandwich the diffractive optical element component 15a from both sides in the y-axis direction. The length of the diffractive optical element component 15a in the x-axis direction is w', which is longer than the length w of the short axis of the laser light 20.

That is, the length h' of the diffractive optical element 15 in the y-axis direction is a length in which one diffractive optical element component 15a and two diffractive optical element components 15b are arranged along the y-axis direction, and is longer than the length h of the long axis of the laser light 20. In addition, the length w' of the diffractive optical element 15 in the x-axis direction is the length of the diffractive optical element components 15a and 15b in the X-axis direction, and is longer than the length w of the short axis of the laser light 20.

Note that the configuration of the diffractive optical element 15 illustrated in FIG. 4 is an example, and does not necessarily have the same shape as the transmission portion 13b of the mask 13. For example, the diffractive optical element 15 may have a rectangular or elliptical shape in which the length in the y-axis direction and the length in the x-axis direction are the same.

The image plane 30 reflects or scatters incident diffracted light and displays the light pattern 23 of the diffracted light. The image plane 30 is disposed in the Fraunhofer region of the diffracted light emitted from the diffractive optical element 15, which is separated from the diffractive optical element 15 in the optical axis direction by a predetermined distance or more.

Next, the operation of the dynamic light pattern generator 10 will be described with reference to FIGS. 7 and 8. FIGS. 7A, 7B and 7C are diagrams illustrating a positional relationship between the laser light 20, the mask 13, and the diffractive optical element 15 on the xy plane. FIGS. 8A and 8B are diagrams illustrating the light pattern 23 generated by the diffractive optical element 15.

First, the laser light 20 emitted from the laser light source 12 is incident on the mask 13. At this time, the laser light 20 incident on the absorption portion 13a is absorbed by the absorption portion 13a. In addition, the laser light 20 incident on the transmission portion 13b is transmitted through the transmission portion 13b and then incident on the diffractive optical element 15. The laser light 20 incident on the diffractive optical element 15 is then phase-modulated by the diffractive optical element 15 and has a phase distribution based on the surface shape. The diffracted light emitted from the diffractive optical element 15 then propagates toward the image plane 30 and generates, on the image plane 30, the light pattern 23 which is a Fourier transform image of a wavefront with a phase distribution based on the surface shape of the diffractive optical element 15.

The position of the laser light 20 on the xy plane is illustrated in FIG. 2, and the position of the diffractive optical element 15 on the xy plane is illustrated in FIG. 4. On the other hand, since the mask 13 rotates about the optical axis 12a, the direction of the transmission portion 13b changes depending on the rotation angle.

FIG. 7A illustrates a case where the direction of the transmission portion 13b is a direction in which the long side of the transmission portion 13b is parallel to the x-axis direction. In this case, a part of the laser light 20 incident on the mask 13 is incident on the absorption portion 13a and absorbed by the absorption portion 13a. In addition, a part of the laser light 20 incident on the mask 13 is transmitted through the transmission portion 13b and then incident on the diffractive optical element component 15a of the diffractive optical element 15. As a result, the laser light 20 incident on the diffractive optical element component 15a is converted into a phase distribution based on the surface shape of the diffractive optical element component 15a. The diffracted light emitted from the diffractive optical element component 15a then propagates to the image plane 30. At this time, as illustrated in FIG. 5, the partial light pattern 21 of diffracted light based on the surface shape of the diffractive optical element component 15a is projected on the image plane 30.

FIG. 7C illustrates a case where the direction of the transmission portion 13b is a direction in which the long side of the transmission portion 13b is parallel to the y-axis direction. In this case, the laser light 20 incident on the mask 13 passes through the transmission portion 13b and then is incident on each of the diffractive optical element components 15a and 15b. As a result, the laser light 20 incident on the diffractive optical element component 15a is converted into a phase distribution based on the surface shape of the diffractive optical element component 15a. The diffracted light emitted from the diffractive optical element component 15a then propagates to the image plane 30. On the other hand, the laser light 20 incident on the diffractive optical element component 15b is converted into a phase distribution based on the surface shape of the diffractive optical element component 15b. The diffracted light emitted from the diffractive optical element component 15b then propagates to the image plane 30. At this time, as illustrated in FIG. 8B, the light pattern 23 obtained by combining the partial light pattern 21 of the diffracted light based on the surface shape of the diffractive optical element component 15a with the partial light pattern 22 of the diffracted light based on the surface shape of the diffractive optical element component 15b is projected on the image plane 30.

FIG. 7B illustrates a case where the direction of the transmission portion 13b is a direction in which the long side of the transmission portion 13b is inclined with respect to the y-axis direction. In this case, a part of the laser light 20 incident on the mask 13 is incident on the absorption portion 13a and absorbed by the absorption portion 13a. In addition, a part of the laser light 20 incident on the mask 13 is transmitted through the transmission portion 13b and then incident on the diffractive optical element 15. Furthermore, a part of the laser light 20 incident on the diffractive optical element 15 is incident on the diffractive optical element component 15a, and is converted into a phase distribution based on the surface shape of the diffractive optical element component 15a. The diffracted light emitted from the diffractive optical element component 15a then propagates to the image plane 30. On the other hand, a part of the laser light 20 incident on the diffractive optical element 15 is incident on the diffractive optical element component 15b, and is converted into a phase distribution based on the surface shape of the diffractive optical element component 15b. The diffracted light emitted from the diffractive optical element component 15b then propagates to the image plane 30. At this time, since a part of the laser light 20 incident toward the diffractive optical element component 15b is absorbed by the absorption portion 13a of the mask 13, the light intensity of the laser light 20 actually incident on the diffractive optical element component 15b is lower than that in the case of FIG. 7C. As a result, as illustrated in FIG. 8A, the light pattern 23 obtained by combining the partial light pattern 21 of the diffracted light based on the surface shape of the diffractive optical element component 15a with the partial light pattern 22 of the diffracted light based on the surface shape of the diffractive optical element component 15b, the partial light pattern 22 having an illuminance lower than that in the case of FIG. 7C, is projected on the image plane 30.

Note that the diffractive optical element component 15a always faces the transmission portion 13b and hardly faces the absorption portion 13a even though the mask 13 rotates about the optical axis 12a. Therefore, the light intensity of the laser light 20 transmitted through the transmission portion 13b and incident on the diffractive optical element component 15a is constant even when the mask 13 rotates.

Furthermore, the rotation of the mask 13 may be continuous rotation, intermittent rotation, or the like. For example, the mask 13 may rotate in such a manner that the illuminance of the partial light pattern 22 continuously changes. Alternatively, the mask 13 may stop when rotated to a rotation angle position where the illuminance of the partial light pattern 22 is any value.

Next, the light pattern 23 generated on the image plane 30 when the mask 13 rotates will be described. As an example, a case where the mask 13 rotates clockwise about the optical axis 12a will be described. Note that the surface shape of the diffractive optical element component 15a is designed as a light intensity distribution targeting the partial light pattern 21 illustrated in FIG. 5. In addition, the surface shape of the diffractive optical element component 15b is designed as a light intensity distribution targeting the partial light pattern 22 illustrated in FIG. 6.

First, in a case where the mask 13 is disposed at the rotation angle position illustrated in FIG. 7A, the laser light 20 is incident only on the diffractive optical element component 15a of the diffractive optical element 15, and thus only the partial light pattern 21 of the diffracted light emitted from the diffractive optical element component 15a is generated on the image plane 30.

Then, the laser light 20 is incident on the entire area of the diffractive optical element component 15a and a part of the diffractive optical element component 15b until the mask 13 rotates from the rotation angle position illustrated in FIG. 7A to the rotation angle position illustrated in FIG. 7B. Therefore, as illustrated in FIG. 8A, the partial light pattern 21 of the diffracted light emitted from the diffractive optical element component 15a and the partial light pattern 22 of the diffracted light emitted from the diffractive optical element component 15b, the partial light pattern 22 having a low illuminance, are generated on the image plane 30.

Here, the mask 13 rotates from the rotation angle position illustrated in FIG. 7A to the rotation angle position illustrated in FIG. 7C via the rotation angle position illustrated in FIG. 7B. At this time, the light intensity of the laser light 20 incident on the diffractive optical element component 15b increases as the rotation angle of the mask 13 increases. In addition, the light intensity of the laser light 20 incident on the diffractive optical element component 15a is constant even when the rotation angle of the mask 13 increases. Therefore, by rotating the mask 13 from the rotation angle position illustrated in FIG. 7A to the rotation angle position illustrated in FIG. 7C, the dynamic light pattern generator 10 can generate the light pattern 23 obtained by combining the partial light pattern 21 whose illuminance is always constant with the partial light pattern 22 whose illuminance gradually increases on the image plane 30.

Furthermore, in a case where the mask 13 is disposed at the rotation angle position illustrated in FIG. 7C, the laser light 20 is not incident on the absorption portion 13a of the mask 13, and thus, the light intensity of the laser light 20 incident on the diffractive optical element component 15b is maximized. Therefore, as illustrated in FIG. 8B, the partial light pattern 21 of the diffracted light emitted from the diffractive optical element component 15a and the partial light pattern 22 of the diffracted light emitted from the diffractive optical element component 15b, the partial light pattern 22 having a high illuminance, are generated on the image plane 30.

Next, the laser light 20 is incident on the entire area of the diffractive optical element component 15a and a part of the diffractive optical element component 15b until the mask 13 rotates from the rotation angle position illustrated in FIG. 7C to the rotation angle position illustrated in FIG. 7A. Therefore, as illustrated in FIG. 8A, the partial light pattern 21 of the diffracted light emitted from the diffractive optical element component 15a and the partial light pattern 22 of the diffracted light emitted from the diffractive optical element component 15b, the partial light pattern 22 having a low illuminance, are generated on the image plane 30.

At this time, the light intensity of the laser light 20 incident on the diffractive optical element component 15b decreases as the rotation angle of the mask 13 increases. In addition, the light intensity of the laser light 20 incident on the diffractive optical element component 15a is constant even when the rotation angle of the mask 13 increases. Therefore, by rotating the mask 13 from the rotation angle position illustrated in FIG. 7C to the rotation angle position illustrated in FIG. 7A, the dynamic light pattern generator 10 can generate the light pattern 23 obtained by combining the partial light pattern 21 whose illuminance is always constant with the partial light pattern 22 whose illuminance gradually decreases on the image plane 30.

Therefore, the dynamic light pattern generator 10 includes one laser light source 12 and one diffractive optical element 15, and rotates the mask 13 including the transmission portion 13b with the long axis and the short axis having the same length as the long axis and the short axis of the cross-section of the laser light 20, so that it is possible to generate the light pattern 23 obtained by combining the partial light pattern 21 whose illuminance is always constant with the partial light pattern 22 whose illuminance gradually changes. In other words, the dynamic light pattern generator 10 can generate the light pattern 23 obtained by combining the partial light pattern 21 that is always turned on with the partial light pattern 22 that repeats turning on and off. In addition, the dynamic light pattern generator 10 can set the illuminance of the partial light pattern 22 to any value by positioning the mask 13 at any rotation angle position.

Generally, the diffractive optical element 15 is manufactured by forming an uneven shape based on a phase distribution for generating a light pattern on one platelike substrate and then cutting out one element. Therefore, even in the case of one diffractive optical element 15 having the diffractive optical element components 15a and 15b with partial light patterns 21 and 22 different from each other as illustrated in FIG. 4, the diffractive optical element can be manufactured in one go without manufacturing the individual diffractive optical element components 15a and 15b and combining the components with each other. Therefore, in the dynamic light pattern generator 10, it is not necessary to manufacture the diffractive optical element 15 for each of the partial light patterns 21 and 22, and it suffices to manufacture one diffractive optical element 15 having the plurality of diffractive optical element components 15a and 15b. As a result, the dynamic light pattern generator 10 can suppress the manufacturing cost.

In addition, the positions where the partial light patterns 21 and 22 projected on the image plane 30 are generated depend on the axial direction of the optical axis 12a, the diffraction angle of the diffractive optical element 15, and the installation angle of the diffractive optical element 15 with respect to the optical axis 12a. Therefore, according to the dynamic light pattern generator 10, even in a case where the plurality of partial light patterns 21 and 22 are generated, the installation positions of the laser light source 12 and the diffractive optical element 15 are fixed, and thus it is not necessary to adjust the positions where the partial light patterns 21 and 22 are generated at the time of assembling the generator. As a result, the dynamic light pattern generator 10 can facilitate the assembly of the generator.

Furthermore, in the dynamic light pattern generator 10, the partial light patterns 21 and 22 with lighting patterns different from each other are generated by one laser light source 12, one mask 13, and one diffractive optical element 15, and thus it is not necessary to provide the laser light source 12, the mask 13, and the diffractive optical element 15 for each of lighting patterns of the partial light patterns 21 and 22. As a result, the dynamic light pattern generator 10 can suppress the manufacturing cost.

As described above, the dynamic light pattern generator 10 according to the first embodiment includes the laser light source 12 that emits the laser light 20, the mask 13 that is rotatably supported about the optical axis 12a of the laser light source 12 and can absorb and transmit the laser light 20 emitted from the laser light source 12, and the diffractive optical element 15 that includes, on the same plane, the plurality of diffractive optical element components 15a and 15b that change the phase of the laser light 20 transmitted through the mask 13 and individually emit the diffracted light beams with the phase distributions for generating partial light patterns 21 and 22 different from each other. Therefore, the dynamic light pattern generator 10 can generate a light pattern whose illuminance can be partially changed.

In the dynamic light pattern generator 10, the diffractive optical element 15 includes the diffractive optical element components 15a and 15b. The optical axis 12a passes through the center of the diffractive optical element component 15a. The diffractive optical element components 15b are arranged adjacent to the diffractive optical element component 15a in such a way as to sandwich the diffractive optical element component 15b. As a result, the dynamic light pattern generator 10 can easily generate the partial light patterns 21 and 22 different from each other using one diffractive optical element 15.

In the dynamic light pattern generator 10, even in a case where the mask 13 is rotated to any rotation angle position, the laser light 20 transmitted through the mask 13 is incident on the diffractive optical element component 15a. Therefore, the dynamic light pattern generator 10 can generate the partial light pattern 21 whose illuminance is always constant.

In the dynamic light pattern generator 10, the mask 13 includes the transmission portion 13b that has the long axis and the short axis with the same length as the long axis and the short axis of the cross-section of the laser light 20 and transmits the laser light 20 emitted from the laser light source 12, and the absorption portion 13a that is provided around the transmission portion 13b and absorbs or reflects the laser light 20 emitted from the laser light source 12. As a result, the dynamic light pattern generator 10 can generate the light pattern 23 obtained by combining the partial light pattern 21 whose illuminance is always constant with the partial light pattern 22 whose illuminance gradually changes.

The dynamic light pattern generator 10 includes the rotation mechanism 14 that rotates the mask 13 about the optical axis 12a as the rotation center. As a result, the dynamic light pattern generator 10 can easily set the rotation direction (clockwise or counterclockwise) and the rotation angle position of the mask 13.

In the dynamic light pattern generator 10, the wavelength of the laser light 20 is a single wavelength. As a result, in the dynamic light pattern generator 10, it is possible to easily manufacture the diffractive optical element components 15a and 15b that change the phase of the laser light 20.

Note that it is possible to modify or omit any component of the embodiment within the scope of the present disclosure.

### INDUSTRIAL APPLICABILITY

Since the dynamic light pattern generator according to the present disclosure includes a light source, a mask, and a diffractive optical element, the dynamic light pattern generator can generate a light pattern whose illuminance can be partially changed, and is suitable for use in a dynamic light pattern generator or the like.

### REFERENCE SIGNS LIST

10: dynamic light pattern generator, 11: base, 12: laser light source, 12a: optical axis, 13: mask, 13a: absorption portion, 13b: transmission portion, 14: rotation mechanism, 15: diffractive optical element, 15a, 15b: diffractive optical element component, 20: laser light, 21, 22: partial light pattern, 23: light pattern, 30: image plane

## Claims

1. A dynamic light pattern generator comprising:
a laser light source to emit laser light;
a mask rotatably supported about an optical axis of the laser light source and capable of absorbing and transmitting the laser light emitted from the laser light source; and
a diffractive optical element including, on a same plane, a plurality of diffractive optical element components to change a phase of the laser light transmitted through the mask and individually emit diffracted light beams with phase distributions for generating partial light patterns different from each other.

2. The dynamic light pattern generator according to claim 1, wherein
the diffractive optical element includes a first diffractive optical element component and second diffractive optical element components,
the optical axis passes through a center of the first diffractive optical element component, and
the second diffractive optical element components are arranged adjacent to the first diffractive optical element component in such a way as to sandwich the first diffractive optical element component.

3. The dynamic light pattern generator according to claim 2, wherein
even in a case where the mask is rotated to any rotation angle position, the laser light transmitted through the mask is incident on the first diffractive optical element component.

4. The dynamic light pattern generator according to claim 1, wherein
the mask includes
a transmission portion having a long axis and a short axis with same length as a long axis and a short axis of a cross-section of the laser light, to transmit the laser light emitted from the laser light source, and
an absorption portion provided around the transmission portion, to absorb or reflect the laser light emitted from the laser light source.

5. The dynamic light pattern generator according to claim 1, further comprising
a rotation mechanism to rotate the mask about the optical axis as a rotation center.

6. The dynamic light pattern generator according to claim 1, wherein
a wavelength of the laser light is a single wavelength.
